# EUROPEAN PATENT APPLICATION

(11) **EP 2 051 316 A1**
(43) Date of publication of application: **22.04.2009**
(21) Application number: 08154882.8
(22) Date of filing: 21.04.2008
(51) Int. Cl.: H01M 2/16, H01M 10/04

(54) **Fabricating method of electrode adhesive bicell**

(30) Priority: 19.10.2007 US 874904
(71) Applicant: Sunyen Co., Ltd., Hsinchu County Jhubei City (TW)
(72) Inventor: Tu, Yu-Ta Sunyen Co., Ltd., Jhubei City (TW)
(74) Representative: Chaillot, Geneviève

(57) **Abstract**

A method for manufacturing an electrode adhesive bicell comprises steps of forming a solid state positive electrode film; forming a solid state negative electrode film; mixing polymer adhesive, a filler and two solvents of different boiling points as a mixing material; the mixing material being coated upon two opposite surfaces of a porous membrane as a coated object; the coated object being then dried as a separator membrane; the two solvents of different boiling points serving to solving the polymer adhesive; after the solvent of lower boiling point is evaporated, the other solvent of high boiling point is retained as a gel with good adhesive and plasticity for the combination of solid state positive electrode film and solid state negative electrode film.

## Description

### FIELD OF THE INVENTION

The present invention relates to cell, and particularly to a method for manufacturing an electrode adhesive bicell, wherein the cell has no defect of the prior art cell and has preferred adhesive and plasticity. The properties of the cell are improved, and no plasticizer (such as DBP) is used. Advantages of the cell are that the manufacturing time is short. The cell is safe, high energy density, long lifetime, low internal impedance, matched to the requirement of environmental protection, and can provides larger power.

### BACKGROUND OF THE INVENTION

A large amount of higher performance and lower cost secondary cells are required because various portable electronic products such as cellular phones, notebook computers, personal digital assistances (PDAs), etc., are developed. Lithium polymer most conforms to the above-mentioned requirements since it has the advantage of high energy density, long circulation times, high operation voltage, long storage life, as well as it is very safe upon using said cells.

In some prior art, such as U.S. patent No: 5,540,741 that utilizes poly vinylidene fluoride and hexa fluoropropylene as the binding agent. Further, they add di-butyl phthalate (DBP) as plasticizers for film-formation of the slurry of positive and negative electrode and the film-formation of films such that the polar plate of positive and negative charge and the films could be separated from a substrate after coating which also let the rear end electrode material is processed through heat-pressing with the electrode separator membrane & the electronic-collecting net. After they were unified into bicell, it extracts DBP out by utilizing the solvents such as methanol so that there has a purity of pore structure for electrode plate and separator membrane.

The advantage of the above-mentioned fabricating method is mainly on the introduction of plasticizer, which let the electrode material having fine degree of plasticity after coating and thus it could combines the electronic collector, the plate material and the separator membrane, after the plasticizers being taken out, it has the effect of pore-forming, which forms the electrolyte conductor. Besides, since the positive and negative electrode are combined tightly through the separator membrane, the joint is difficult to form voids which interferes with the ion transport, and thus it is unnecessary to get rid of the requirement of tightly pressing the electrode of the outer package such that the cells are lighter and thinner. However, since it took too long to take out DBP, which consumes large amounts of extract solvent, it is easily to be left, which influences the performance of cells. That's its drawback.

### SUMMARY OF THE INVENTION

Accordingly, the primary object of the present invention is to provide a method for manufacturing an electrode adhesive bicell, wherein the cell has no defect of the prior art cell and has preferred adhesive and plasticity. The properties of the cell are improved, and no plasticizer (such as DBP) is used. Advantages of the cell are that the manufacturing time is short. The cell is safe, high energy density, long lifetime, low internal impedance, matched to the requirement of environmental protection, and can provides larger power.

To achieve above objects, the present invention provides a method for manufacturing an electrode adhesive bicell, comprising steps of: (a) forming a solid state positive electrode film; (b) forming a solid state negative electrode film; (c) mixing polymer adhesive, a filler and two solvents of different boiling points as a mixing material; the mixing material being coated upon two opposite surfaces of a porous membrane as a coated object; the coated object being then dried as a separator membrane; the two solvents of different boiling points serving to solving the polymer adhesive; after the solvent of lower boiling point is evaporated, the other solvent of high boiling point is retained as a gel with good adhesion and plasticity for the combination of solid state positive electrode film and solid state negative electrode film; and (d) cutting the solid state positive electrode film, the solid state negative electrode film and the separator membrane to have predetermined sizes according to a desired capacity; the separator membrane being clamped between the solid state positive electrode film and the solid state negative electrode film; then, compressing, heat-blowing and drying the combination structure as a bicell. The method of the invention may comprise a further step of (e) welding a positive electrode conductive stem and a negative electrode conductive stem to the bicell and then welded bicell being placed into an aluminum film bag for vacuuming and then drying for dewater; then electrolyte is filled into the bag for activating the bicell.

The various objects and advantages of the present invention will be more readily understood from the following detailed description when read in conjunction with the appended drawing.

### BRIEF DESCRIPTION OF THE DRAWINGS

Fig. 1 is a structural view of the cell of the present invention.
Fig. 2 is a perspective view of the cell of the present invention.
Fig. 3 is a structural view about the positive electrode of the cell of the present invention.
Figs. 4 and 5 are another structural views of the positive electrode of the present invention.
Fig. 6 is a structural view of the negative electrode of the present invention.
Figs. 7 and 8 are another structural views of the negative electrode of the present invention.

### DETAILED DESCRIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

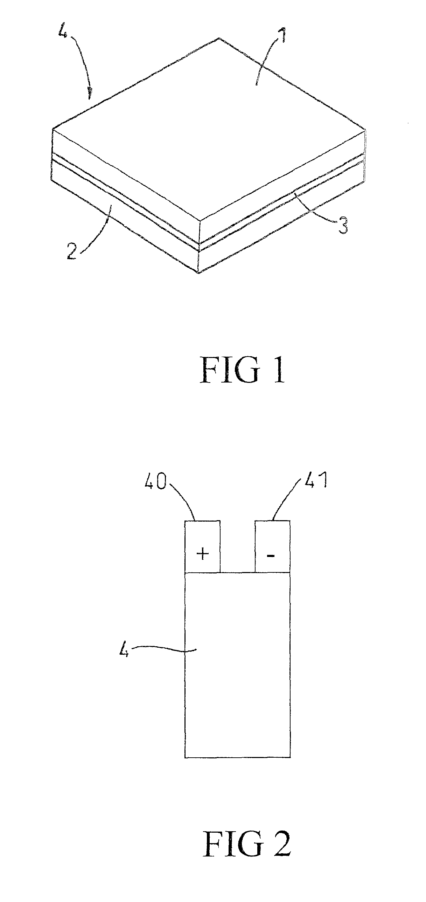

The process for manufacturing an electrode adhesive cell according to the present invention comprising the step of:
(1) forming a solid state positive electrode film;
(2) forming a solid state negative electrode film;
(3) mixing polymer adhesive, a filler and two solvents of different boiling points as a mixing material; the mixing material being coated upon two opposite surfaces of a sheet of porous membrane (such as polyethylene membrane or polypropylene membrane) as a coated object; the coated object being then dried as a separator membrane; the two solvents of different boiling points serving to solving the polymer adhesive; after the solvent of lower boiling point is evaporated, then the other solvent of high boiling point is retained as a gel with good adhesive and plasticity for the combination of the solid state positive electrode film and the solid state negative electrode film.
(4) Referring to Fig. 1, cutting the solid state positive electrode film 1, the solid state negative electrode film 2 and the separator membrane 3 to have predetermined sizes according to a desired capacity. The separator membrane 3 is clamped between the solid state positive electrode film 1 and the solid state negative electrode film 2. Then, compressing, heat-blowing and drying the combination structure as a bicell 4.
(5) Referring to Fig. 2, welding a positive electrode conductive stem 40 and a negative electrode conductive stem 41 to the bicell 4 and then welded bicell 4 being placed into an aluminum film bag for vacuuming and then drying for dewater. Then electrolyte is filled into the bag for activating the bicell 4.

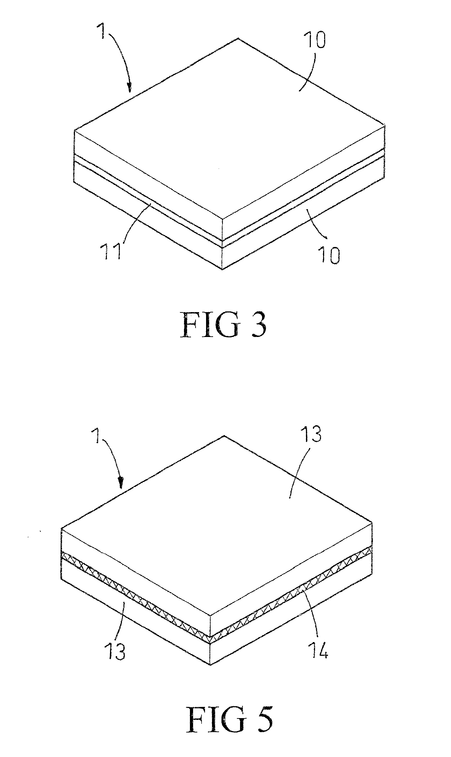

Referring to Fig. 3, in the present invention, the method for forming the solid state positive electrode film 1 includes the step of mixing a polymer adhesive, two solvents (such as acetone and N-Methyl-2-pyrrolidone, NMP) of different boiling points, a conductive carbon, an active material into a slurry material 10; and then coating the slurry material 10 at two opposite surfaces of a current collector 11; and then the coated collector 11 being dried so as to form the solid state positive electrode film, wherein the current collector 11 may be an aluminum film. The two solvents of different boiling points serves to solve the polymer adhesive; after the solvent (such as acetone) of lower boiling point is evaporated, then the other solvent (such as N-Methyl-2-pyrrolidone, NMP) of high boiling point is retained as a gel with good adhesion and plasticity for the combination of current collector 11.

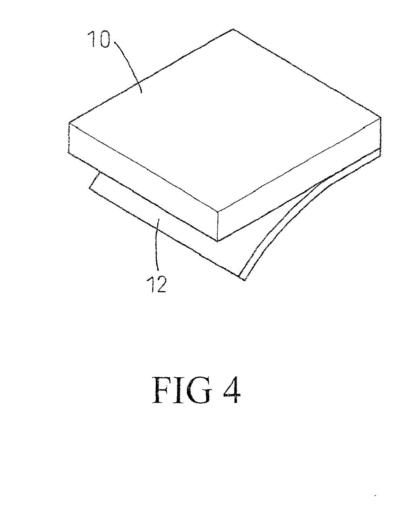

Referring to Fig. 4, another method for forming the solid state positive electrode film includes the step of mixing a polymer adhesive, two solvents (such as acetone and N-Methyl-2-pyrrolidone, NMP) of different boiling points, a conductive carbon, an active material into a slurry material 10; and previously coating the slurry material 10 at one side surface of a PET (polyethylene terephthalate) substrate 12. Wherein the two solvents of different boiling points serves to solve the polymer adhesive; after the solvent (such as acetone) of lower boiling point is evaporated, then the other solvent (such as N-Methyl-2-pyrrolidone, NMP) of high boiling point is retained as a gel. After drying, the PET substrate 12 is taken down then the slurry material 10 as a positive electrode membrane. As shown in Fig. 5, the positive electrode membrane 13 is placed at two opposite sides of a netlike current collector 14 as a combining structure. Then the combining structure is heat-compressed as a solid state positive electrode film 1. In this process, the netlike current collector 14 is an aluminum net.

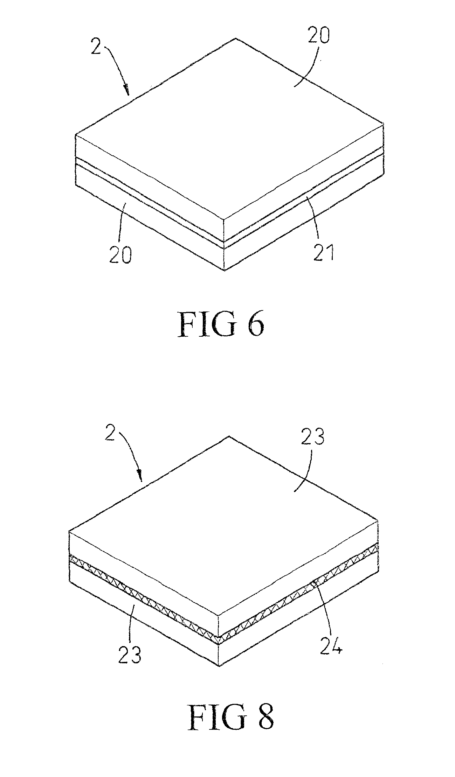

Referring to Fig. 6, in the present invention, the method for forming the solid state negative electrode film 2 includes the step of mixing a polymer adhesive, two solvents (such as acetone and N-Methyl-2-pyrrolidone, NMP) of different boiling points, a conductive carbon, an active material into a slurry material 20; and then coating the slurry material 20 at two opposite surfaces of a current collector 21; and then the coated current collector 21 being dried so as to form the solid state negative electrode film 2, wherein the current collector 21 may be a copper film. The two solvents of different boiling points serves to solve the polymer adhesive; after the solvent (such as acetone) of lower boiling point is evaporated, then the other solvent (such as N-Methyl-2-pyrrolidone, NMP) of high boiling point is retained as a gel with good adhesion and plasticity for the combination of current collector.

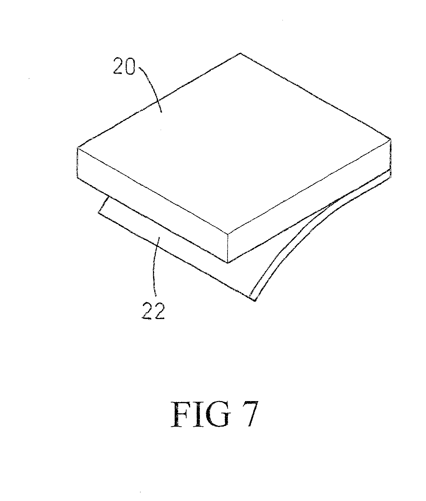

Referring to Fig. 7, another method for forming the solid state negative electrode film includes the step of mixing a polymer adhesive, two solvents (such as acetone and N-Methyl-2-pyrrolidone, NMP) of different boiling points, a conductive carbon, an active material into a slurry material 20; and previously coating the slurry material 20 at one side surface of a PET (polyethylene terephthalate) substrate 22. Wherein the two solvents of different boiling points serves to solve the polymer adhesive; after the solvent (such as acetone) of lower boiling point is evaporated, then the other solvent (such as N-Methyl-2-pyrrolidone, NMP) of high boiling point is retained as a gel. After drying, the PET substrate 22 is taken down then the slurry material 20 as a negative electrode membrane. As shown in Fig. 8, the negative electrode membrane 23 is placed at two opposite sides of a netlike current collector 24 as a combining structure. Then the combining structure is heat-compressed as a solid state negative electrode film 2. In this process, the netlike current collector 24 is a copper net.

A further analysis about the methods for manufacturing the solid state positive electrode film, solid state negative electrode film and separator membrane will be described herein.

### (A) Positive electrode film

In the present invention, the method for forming the solid state positive electrode film includes the step of mixing and then grinding a polymer adhesive, two solvents (for example acetone and NMP) of different boiling points, a conductive carbon, an active material into a positive electrode slurry material 10 wherein the grinding is made by a ball grinding machine through five hours. The polymer adhesive contains poly vinylidene fluoride with a ratio of about 2∼15 wt%. The conductive carbon is such as carbon black with a ratio of about 2∼10 wt%. The active material is such as LiCoO2, LiNi02, LiMn204, LiNixCo1-xO2 with a ratio of about 75∼96 wt%.

The current collector is an aluminum foil or an aluminum net. If aluminum foil is used, the positive electrode slurry material is coated directly upon the aluminum foil by a coating machine. If the aluminum net is used, the positive electrode slurry material is previously coated upon the PET (polyethylene terephthalate) substrate. After drying, the PET substrate is taken down then the positive electrode slurry material as a positive electrode membrane. Then the positive electrode membrane is placed at two opposite sides of the aluminum net as a combining structure. Then the combining structure is heat compressed and cut to have a desired size as a solid state positive electrode film.

### (B) Negative electrode film

In the present invention, the method for forming the solid state negative electrode film 2 includes the step of mixing and then grinding a polymer adhesive, two solvents (for example acetone and NMP) of different boiling points, a conductive carbon, an active material into a negative electrode slurry material wherein the grinding is made by a ball grinding machine through five hours. The polymer adhesive contains poly vinylidene fluoride with a ratio of about 2∼15 wt%. The conductive carbon is such as carbon black with a ratio of about 2∼10 wt%. The active substance such as the mesocarbon microbeads, nature graphite as well as its refinement, other carbon material, tin compound, silicide has a content of 75-96 wt%.

The current collector is a copper foil or a copper net. If copper foil is used, the negative electrode slurry material is coated directly upon the copper foil by a coating machine. If the copper net is used, the negative electrode slurry material is previously coated upon the PET substrate. After drying, the PET substrate is taken down then the negative electrode slurry material as a negative electrode membrane. Then the negative electrode membrane is placed at two opposite sides of a netlike current collector (copper net) as a combining structure. Then the combining structure is heat compressed and cut to have a desired size as a solid state negative electrode film.

### (C) Separator membrane

The separator membrane is formed by mixing the adhesives such as poly vinylidene fluoride with a ratio of 20-80wt%, filler with a ratio of (SiO₂, TiO₂, Al₂O₃...) 20-80% with suitable amounts of solvents (such as acetone and N-Methyl-2-pyrrolidone, NMP) of two different boiling points by using a ball-grinding machine through 5 hours so as to form a the required separator membrane slurry. The way of film-formation could be fabricated by coating the slurry upon two opposite surfaces of a polyethylene membrane or polypropylene membrane so as to form with the separator membrane. The two solvents of different boiling points serving to solve the polymer adhesive; after the solvent (such as acetone) of lower boiling point is evaporated, then the other solvent (such as N-Methyl-2-pyrrolidone, NMP) of high boiling point is retained as a gel with good adhesion and plasticity for the combination of solid state positive electrode film and solid state negative electrode film.

### (D) Bicell

The solid state positive electrode film, solid state negative electrode film, and separator membrane manufactured by above mentioned ways are cut to a desired size and then they are arranged with the order of positive electrode film, separator membrane, negative electrode film, separator membrane and positive electrode film or the order of negative electrode film, separator membrane, positive electrode film, separator membrane and negative electrode film so as to form a bicell. The bicell is compressed and then is heat-dried.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A method for manufacturing an electrode adhesive bicell, comprising steps of:
(a) forming a solid state positive electrode film;
(b) forming a solid state negative electrode film;
(c) mixing polymer adhesive, a filler and two solvents of different boiling points including acetone and NMP(N-Methyl-2-pyrrolidone) as a mixing material; the mixing material being coated upon two opposite surfaces of a porous membrane as a coated object; the coated object being then dried as a separator membrane; the two solvents of different boiling points serving to solving the polymer adhesive; after the acetone solvent of lower boiling point is evaporated, the other NMP(N-Methyl-2-pyrrolidone) solvent of high boiling point is retained as a gel with good adhesive and plasticity for the combination of solid state positive electrode film and solid state negative electrode film; and
(d) cutting the solid state positive electrode film, the solid state negative electrode film and the separator membrane to have predetermined sizes according to a desired capacity; the separator membrane being clamped between the solid state positive electrode film and the solid state negative electrode film; then, compressing, heat-blowing and drying the combination structure as a bicell.

2. A method for manufacturing an electrode adhesive bicell comprising the steps of:
(a) forming a solid state positive electrode including the step of mixing a polymer adhesive, two solvents of different boiling points including acetone and NMP(N-Methyl-2-pyrrolidone), and electrode material into electrode slurry; the electrode slurry material being coated upon two opposite sides of a current collector as a combination structure; after drying, the combination structure is formed as a solid state positive electrode film; the two solvents of different boiling points serving to solve the polymer adhesive; wherein after the acetone solvent of lower boiling point is evaporated, then the other NMP(N-Methyl-2-pyrrolidone) solvent of high boiling point is retained as a gel with good adhesive and plasticity for the combination of solid state positive electrode film and the current collector;
(b) forming a solid state negative electrode film including the step of mixing and then grinding a polymer adhesive, two solvents of different boiling points including acetone and NMP(N-Methyl-2-pyrrolidone), and electrode material into a negative electrode slurry material; then the negative electrode film is placed upon two opposite sides of a current collector as a combining structure; then the combining structure is dried so as to form a solid state negative electrode film; the two solvents of different boiling points serving to solve the polymer adhesive; wherein after the acetone solvent of lower boiling point is evaporated, then the other NMP(N-Methyl-2-pyrrolidone) solvent of high boiling point is retained as a gel with good adhesion and plasticity for the combination of the solid state negative electrode film and the current collector;
(c) forming a separator membrane including the step of mixing a polymer adhesive, a filler and two solvents of different boiling points including acetone and NMP(N-Methyl-2-pyrrolidone) into slurry material; the slurry material being coated upon two opposite sides of a porous membrane as a combination structure; after drying, the combination structure is formed as a separator membrane; the two solvents of different boiling points serving to solve the polymer adhesive; wherein after the acetone solvent of lower boiling point is evaporated, then the other NMP(N-Methyl-2-pyrrolidone) solvent of high boiling point is retained as a gel with good adhesive and plasticity for the combination of the solid state positive electrode film and the solid state negative electrode film;
(d) cutting the solid state positive electrode film, the solid state negative electrode film and the separator membrane into predetermined sizes; then they are compressed and hot dried so as to form as a bicell.

3. A method for manufacturing an electrode adhesive bicell comprising the steps of:
(a) forming a solid state positive electrode film including the step of mixing a polymer adhesive, two solvents of different boiling points including acetone and NMP(N-Methyl-2-pyrrolidone), and electrode material into a positive electrode slurry material; the positive electrode slurry material being previously coated at one side surface of a substrate, wherein the two solvents of different boiling points serves to solve the polymer adhesive; after the acetone solvent of lower boiling point is evaporated, then the other NMP (N-Methyl-2-pyrrolidone) solvent of high boiling point is retained as a gel; after drying, the substrate is taken down then the slurry material as a positive electrode membrane which are placed at two sides of a netlike current collector; after hot compressing, it being formed as a solid state positive electrode film;
(b) forming a solid state negative electrode film including the step of mixing a polymer adhesive, two solvents of different boiling points including acetone and NMP(N-Methyl-2-pyrrolidone), and electrode material into a negative electrode slurry material; the negative electrode slurry material being previously coated at one side surface of a substrate, wherein the two solvents of different boiling points serves to solve the polymer adhesive; after the acetone solvent of lower boiling point is evaporated, then the other NMP (N-Methyl-2-pyrrolidone) solvent of high boiling point is retained as a gel; after drying, the substrate is taken down then the slurry material as a negative electrode membrane which are placed at two sides of a netlike current collector, after hot compressing, it being formed as a solid state negative electrode film;
(c) forming a separator membrane including the step of mixing a polymer adhesive, a filler, two solvents of different boiling points including acetone and NMP(N-Methyl-2-pyrrolidone) into slurry material; the slurry material being coated upon two opposite sides of a porous membrane as a combination structure; after drying, the combination structure is formed as a separator membrane; the two solvents of different boiling points serving to solve the polymer adhesive; wherein after the acetone solvent of lower boiling point is evaporated, then the other NMP(N-Methyl-2-pyrrolidone) solvent of high boiling point is retained as a gel with good adhesion and plasticity for the combination of the solid state positive electrode film and the solid state negative electrode film;
(d) cutting the solid state positive electrode film, the solid state negative electrode film and the separator membrane into predetermined sizes; then they are compressed and hot dried into bicell.

4. The method for manufacturing an electrode adhesive bicell as claimed in claims 1, wherein the porous membrane is one of a polyethylene membrane and a polypropylene membrane.

5. The method for manufacturing an electrode adhesive bicell as claimed in claims 2, wherein the current collector of the solid state positive electrode film is aluminum film, and the current collector of the solid state negative electrode film is copper film.

6. The method for manufacturing an electrode adhesive bicell as claimed in claims 3, wherein the substrates in the solid state positive electrode film and solid state negative electrode film are PET (polyethylene terephthalate); and the netlike current collector of the solid state positive electrode film is aluminum net, and the netlike current collector of the solid state negative electrode film is copper net.
